# EUROPEAN PATENT APPLICATION

(11) **EP 2 566 016 A2**
(43) Date of publication of application: **06.03.2013**
(21) Application number: 12177554.8
(22) Date of filing: 24.07.2012
(51) Int. Cl.: H02K 5/22, H05K 5/02, H02K 11/00

(54) **Water supply device**

(30) Priority: 29.08.2011 JP 2011186457
(71) Applicant: Panasonic Corporation, Osaka 571-8501 (JP)
(72) Inventor: Morizumi, Koichi, Chuo-ku, Osaka 540-6207 (JP); Kimura, Masakuni, Chuo-ku, Osaka 540-6207 (JP); Fukuda, Tetsuya, Chuo-ku, Osaka 540-6207 (JP); Ueda, Hidetoshi, Chuo-ku, Osaka 540-6207 (JP); Syukuri, Youichi, Chuo-ku, Osaka 540-6207 (JP)
(74) Representative: Appelt, Christian W.

(57) **Abstract**

A water supply device includes: a DC pump (1) configured to be driven by a DC voltage; and a converter (2) configured to convert an AC voltage into the DC voltage. The DC pump (1) comprises a first connector (27) and the converter (2) comprises a second connector (35). The first and second connectors (27 and 35) are integrally connected with each other.

## Description

### Technical Field

The invention relates to a water supply device comprising a DC pump and a converter.

### Background Art

Japanese Patent Application Publication No. 2011-114979 discloses a pump that is a DC pump configured to be driven by a DC voltage supplied from an external unit and includes a connector electrically connected to a battery or the like. In order to drive the DC pump by AC power, a converter for converting an AC voltage into a DC voltage is used and a connecter of the pump side is connected to the converter through a lead wire(s). Thus, the DC pump and the converter are connected to each other and constitute a water supply device.

In a water supply device with a lead wire(s) connecting a DC pump and a converter, a noises generates from a part of the lead wire and influences a pump control.

### Summary of Invention

It is an object of the present invention to connect a DC pump and a converter without a lead wire(s) causing a noise to provide a compact water supply device in whole.

A water supply device of the present invention comprises: a DC pump (1) configured to be driven by a DC voltage; and a converter (2) configured to convert an AC voltage into the DC voltage. The DC pump (1) comprises a first connector (27) and the converter (2) comprises a second connector (35). The first and second connectors (27 and 35) are integrally connected with each other.

In an embodiment, one of the first and second connectors (27 and 35) is a pin plug (34) and the other is a terminal receptacle (26) with a hole into which the pin plug (34) is inserted.

In an embodiment, the converter (2) is rotatable with respect to the DC pump (1) with the pin plug (34) inserted into the hole of the terminal receptacle (26).

In an embodiment, the converter (2) comprises a casing (30) that comprises: a base (31) formed with the second connector (35); and a cover (32) facing the base (31). The cover (32) comprises: a top wall (40) approximately in parallel with the base (31); and slant walls (41) diagonally extended to the base (31) side from both edges of the top wall (40)

In an embodiment, the converter (2) comprises a casing (30) that comprises: a base (31) formed with the second connector (35); and a cover (32) facing the base (31). The cover (32) has a concave/convex-shaped inner face for noise reduction.

In an embodiment, the converter (2) comprises a casing (30) that comprises a base (31) formed with the second connector (35), and the base (31) is made of conductive metal.

In an embodiment, the DC pump (1) comprises a pump body (10) this has a first connection face (11) and comprises, as the first connector (27), a pin plug extended from the first connection face (11). The base (31) is made of conductive metal and has a second connection face (33) which has a hole formed at a central part of the second connection face (33) and is in contact with the first connection face (11). The base (31) also comprises, as the second connector (35), a terminal receptacle placed inside the hole of the second connection face (33). The first and second connectors (27 and 35) are mechanically and electrically connected with each other in the hole of the base (31).

In the present invention, it is possible to connect the DC pump and the converter without a lead wire causing a noise to provide a compact water supply device in whole.

### Brief Description of Drawings

Preferred embodiments of the invention will now be described in further details. Other features and advantages of the present invention will become better understood with regard to the following detailed description and accompanying drawings where:
FIG. 1 is a perspective view of a water supply device with a DC pump and a converted separated, in accordance with a first embodiment of the present invention;
FIG. 2 is another perspective view of the water supply device with the DC pump and the converted separated;
FIG. 3 is a longitudinal sectional view of the DC pump;
FIG. 4 is a perspective view of a water supply device with a cover detached, in accordance with a second embodiment of the present invention;
FIG. 5 is a schematic view showing that a noise is reduced in a converter of the water supply device;
FIG. 6 is a perspective view of a water supply device in accordance with a third embodiment of the present invention; and
FIG. 7 is a schematic view of a fundamental arrangement of the water supply device.

### Description of Embodiments

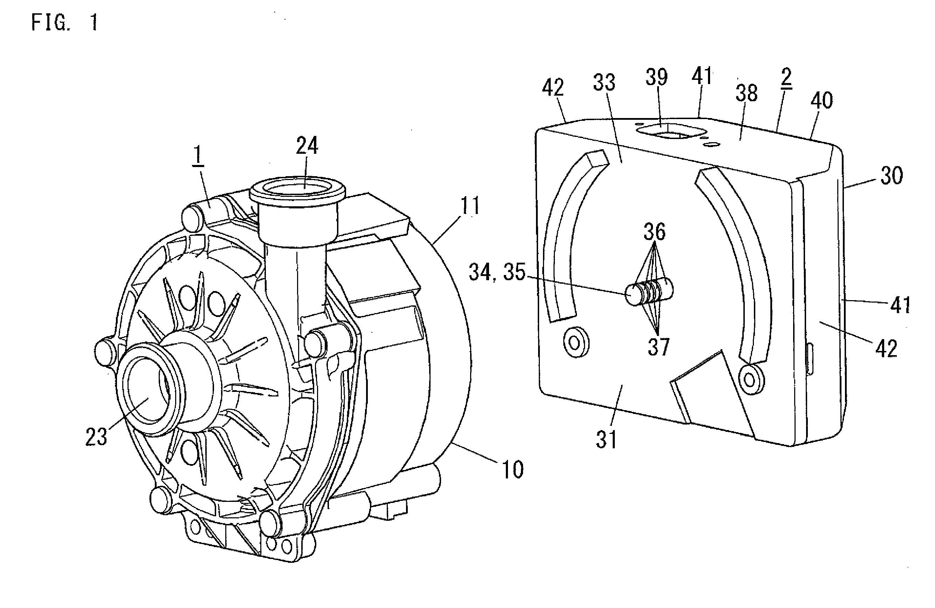

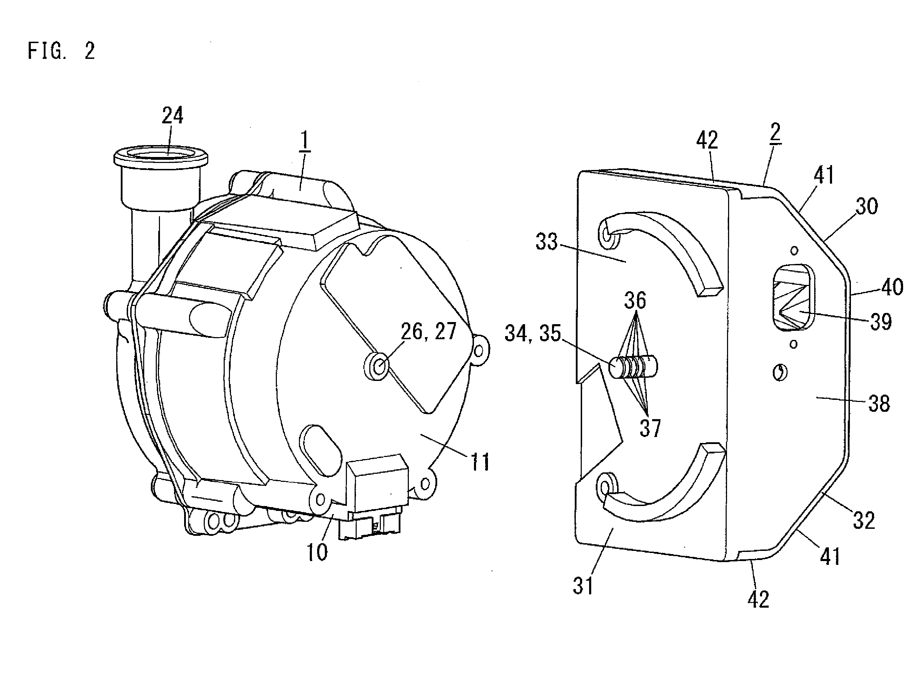

FIGS 1 and 2 show a water supply device in accordance with a first embodiment of the present invention. The water supply device is formed of a DC pump 1 configured to be driven by a DC voltage, and a converter 2 configured to convert an AC voltage into the DC voltage. The DC pump 1 and the converter 2 are not connected with each other in the example of the figures, but are used in integrally connected condition.

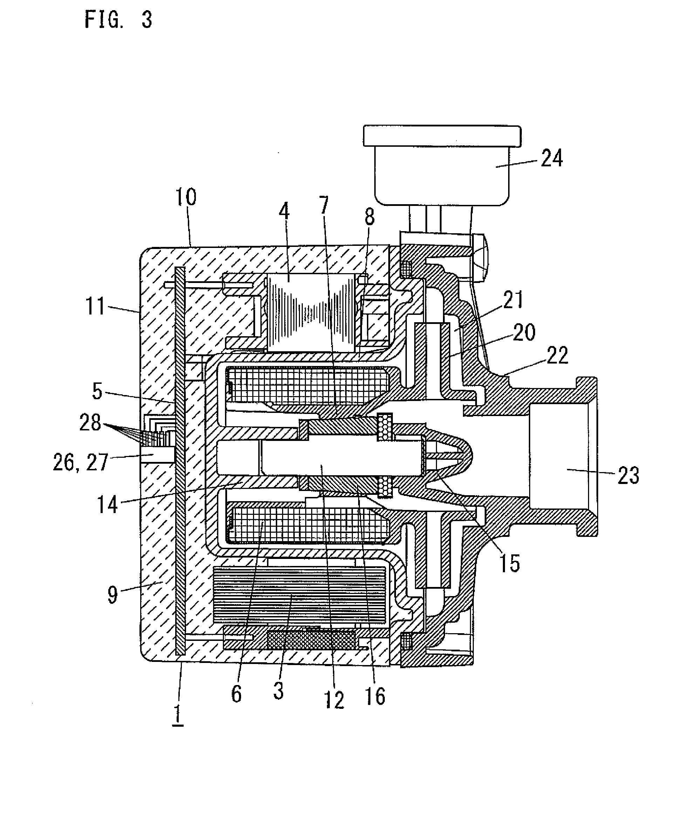

First, the configuration of the DC pump 1 is explained with reference to FIG. 3. The DC pump 1 is an inner rotor type of pump and includes a stator 4 having a winding 3, a control circuit board 5 configured to control power supply to the winding 3, a rotor 7 having a magnet 6, and a partition wall 8 for separating the stator 4 side and the rotor 7 side. The partition wall 8 has bowl-shaped structure made from PPS (polyphenylene sulfide) resin containing carbons, and becomes unified with the control circuit board 5 by resin 9 with an outer circumference part of the partition wall 8 (the bowl-shaped part) inserted into a concave portion of the stator 4. Thus, a stator block 10 is formed.

The rotor 7 is located inside the bowl-shaped partition wall 8 so as to keep a slight space from an inner circumference of the partition wall 8. The rotor 7 has a hollow circular form having a central axis, and is supported by an axis member 12, which is made of ceramic and located in a center of the rotor 7, so that the rotor 7 is capable of rotating around the member 12. A base end of the axis member 12 in the central axis direction is supported by an axis supporting part 14 extended from an inside bottom of the partition wall 8 so that the axis member 12 is prohibited from rotating. An apical end of the axis member 12 is supported by an axis supporting part 15 paired with the axis supporting part 14 so that the axis member 12 is prohibited from rotating. A tubular bearing 16 into which the axis member 12 is inserted is located inside the aforementioned hollow circular part so that the rotor 7 is capable of rotating around the axis member 12 through the bearing 16.

A pump case 22 is fixed to the partition wall 8 with screws to form a pump chamber 21 between the pump case 22 and the partition wall 8. An impeller 20 is put in the pump chamber 21 so as to be capable of rotating. The impeller 20 is formed together with the rotor 7 and is driven and rotated along with the rotor 7 in response with rotary drive of the rotor 7. Each of a suction pipe 23 and a discharge pipe 24 is extended from the pump case 22, and the former is adapted to suck water in the pump chamber 21, while the latter is adapted to discharge the water from the pump chamber 21. The suction pipe 23 is extended in the same axis as the axis member 12 from the pump case 22, and the discharge pipe 24 is extended in a lateral direction from a lateral face of the pump case 22.

In the DC pump 1 of the present embodiment, the control circuit board 5 is integrally connected to the stator 4, and the control circuit board 5 and the stator 4 are resin-molded at the opposite side of the partition wall 8 from the pump case 22

The stator block 10 has a connection face 10 formed approximately in parallel with the control circuit board 5. The face 10 is approximately flat and is formed with a terminal receptacle 26 having a hole at a central part of the face 10. This terminal receptacle 26 is a pump-side connector 27 (a first connector) which the DC pump 1 of the embodiment has.

The terminal receptacle 26 is a concave hole into which a pin plug 34 described below is inserted, and electrodes 28 are arranged in an axial direction. In the example Fig.3, the axial direction is parallel with the aforementioned central axis, and five electrodes 28 are arranged and used for drive power supply, GND, control power supply, pumpability variable signal and rotation number (rps) signal

Next, the configuration of the converter 2 is explained with reference to FIGS. 1 and 2. The converter 2 includes approximately a box-shaped casing 30 that forms a outer shell which a storage space is provided in and each devices for conversion (not shown) is placed in. The casing 30 is formed of a base 31 detachably attached to the stator block 10 of the DC pump 1, and a cover 32 forming a storage space between the base 31 and the cover 32.

The base 31 has an approximately flat connection face 33 from a central part which the aforementioned pin plug 34 is extended. The pin plug 34 is a converter-side connector 35 (a second connector) which the converter 2 of the embodiment has. The pin plug 34 is a single head of multipolar plug (a coaxial multipola plug), and five electrodes are arranged concentrically and correspond one-for-one to the electrodes 28 of the terminal receptacle 26 in the DC pump 1. An insulating part 37 is placed between each neighboring electrodes 36.

The casing 30 further includes two facing side walls 38 approximately perpendicular to the connection face 33. One of the side walls 38 is provided with an AC connector 39 for connection with an AC power (not shown)

The cover 32 is placed at a position facing the base 31, and includes a central top wall 40, two slant walls 41 between which the central top wall 40 is in a first direction, and two side walls 42 between which the slant walls 41 are in the first direction. The top wall 40 is approximately parallel with the base 31, and the slant walls 41 are extended from both edges (opposite edges) of the top wall 40 in the first direction and inclined toward the base 31 side. The side walls 42 are extended from both edges of the slant walls 41 in the first direction and are approximately perpendicular to the base 31. Apical ends of the side walls 42 are in contact with ends of the base 31, respectively.

In order to attach the converter 2 to the DC pump 1, the pin plug 34 of the converter 2 has only to be inserted into the hole of the terminal receptacle 26 in the DC pump 1 so that they (34 and 26) are integrally connected with each other and the connection face 33 of the converter 2 is in contact with the connection face 11 of the DC pump 1. The converter 2 is rotatable with respect to the DC pump 1 with the pin plug 34 inserted into the hole of the terminal receptacle 26. Accordingly, the converter 2 may be set at a rotational position shown as FIG. 1 or 2 in response to various situation such as a connection direction with an AC power supply or the like.

In the embodiment, the cover 32 has the top wall 40 and the slant walls 41, and accordingly it is possible to secure a storage space capable of including a tall device between the base 31 and the cover 32 (especially between the base 31 and the top wall 40), and to prevent noise resonance in the storage space through the slant walls 41.

In an example, a pin plug 34 and a terminal receptacle 26 are used as the pump-side connector 27 and the converter-side connector 35, respectively. In this example, the pump-side connector 27 and the converter-side connector 35 are rotatably connected with each other.

In an example, a stator block 10 (a DC pump body) has a connection face 11 (a first connection face) and includes, as a pump-side connector 27 (a first connector), a pin plug (see 34) extended from the connection face 11 in place of the terminal receptacle 26. A base 31 of this example is made of conductive metal and has a connection face 33 (a second connection face) which has a hole formed at a central part of the face 33 and is in contact with the connection face 11. The base 31 also includes, as a converter-side connector 35 (a second connector), a terminal receptacle (see 26) placed inside the hole of the connection face 33 in place of the pin plug 34. In this example, the first and second connectors are mechanically and electrically connected with each other in the hole of the base 31 made of conductive metal. Thereby, it is possible to preferably solve the problem of a lead wire(s) causing a noise. It is preferable that the first and second connectors should be mechanically and electrically connected with each other only in the hole of the base 31 made of conductive metal.

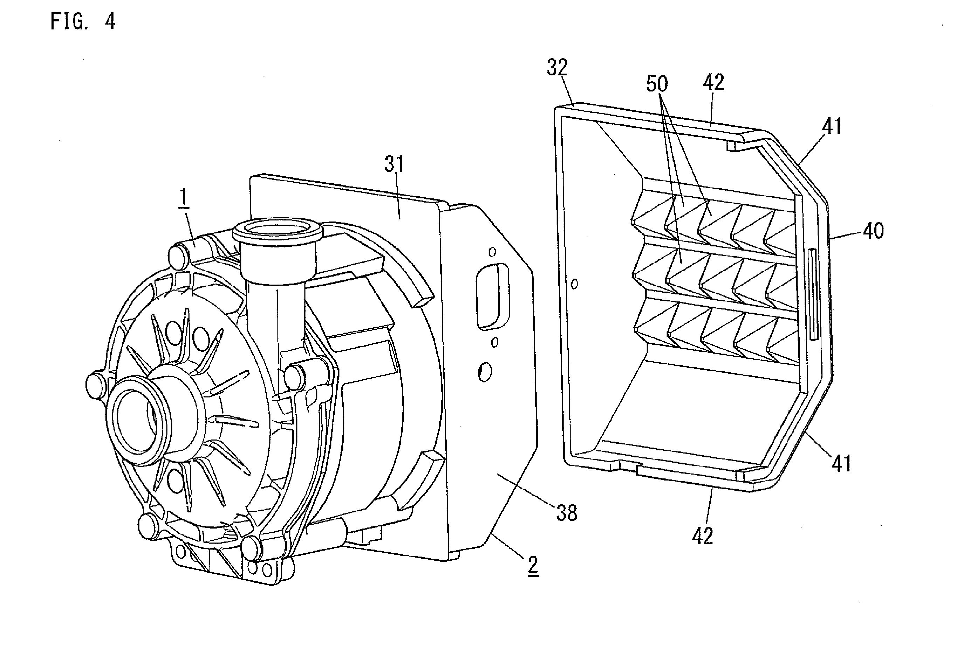

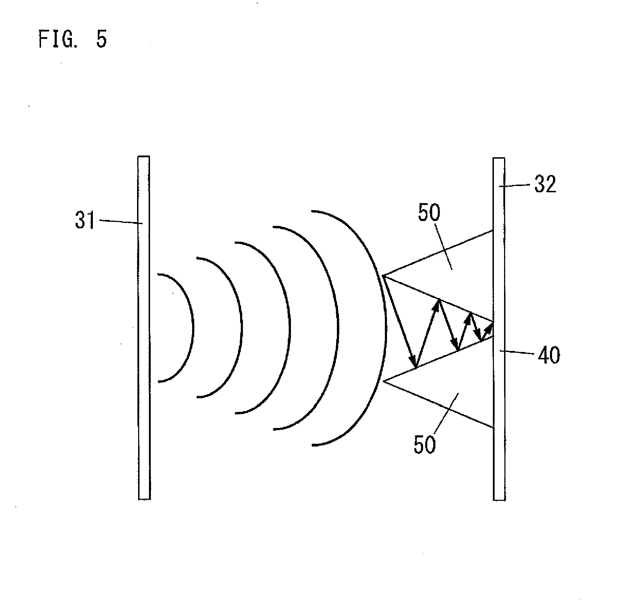

A water supply device in accordance with a second embodiment of the present invention is explained with reference to FIGS. 4 and 5. For the purpose of clarity, like kind elements are assigned the same reference numerals as depicted in the first embodiment.

In the water supply device of the embodiment, as shown in FIG. 4, multiple matrix convexities 50 are formed on an inner face of the top wall 40, approximately in parallel with the base 31, of the cover 32 located at the converter 2 side. Each convexity 50 is in the shape of a square pyramid, and each apex of the convexities 50 is placed toward the base 31. Thus, multiple convexities 50 are arranged, so that the cover 32 (the top wall 40) has a concave/convex- shaped inner face for noise reduction. FIG. 5 shows that a nose is generated by vibration propagating from the DC pump 1 to the base 31 and the noise is reduced with the concave/convex- shaped inner face of the cover 32.

In the embodiment, the multiple convexities 50 are arranged on the inner face of the top wall 40 in addition to the slant walls 41 at both sides of the top wall 40 in the cover 32, and accordingly it is possible to secure a storage space and to suppress resonance or the like in the storage space.

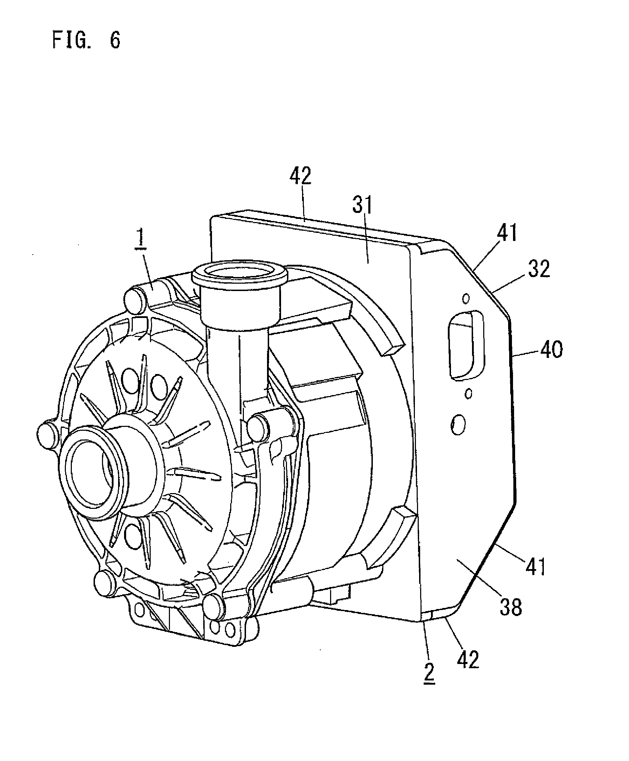

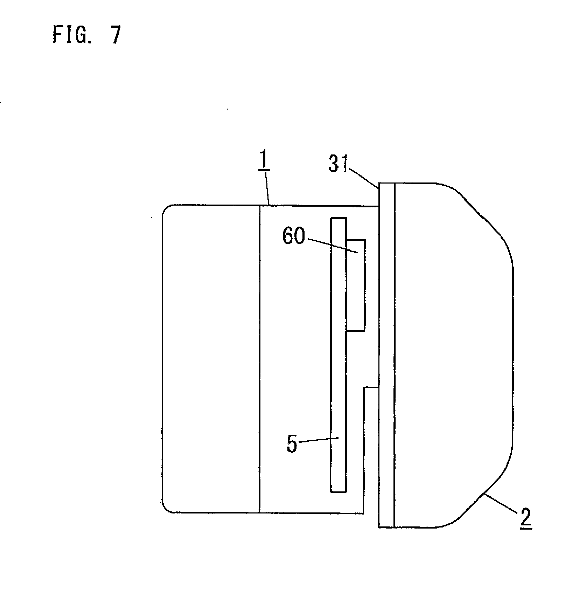

A water supply device in accordance with a third embodiment of the present invention is explained with reference to FIGS. 6 and 7. For the purpose of clarity, like kind elements are assigned the same reference numerals as depicted in the first and second embodiments.

In the water supply device of the embodiment, at least the base 32 of the casing 30 in the converter 2 is made of conductive metal such as aluminum, iron or the like. As shown in FIG. 7, the base 31 intervenes between devices in the converter 2 and parts resin-molded in the DC pump 1, namely the control circuit board 5 and inverter parts 60 mounted on the board 5. The base 31 is a conductive metal plate, and accordingly functions as a shielding plate of a radiation noise generated from a motor of the DC pump 1 and the inverter parts 60 to reduce the noise. In addition, the base 31 functions as a heat sink to improve a radiation performance. It is preferable that the base 31 should be connected to GND (ground). It is also preferable that the base 31 should integrally molded with a portion of resin 9 in the DC pump 1.

In the first to third embodiments, each water supply device includes a DC pump 1 configured to be driven by a DC voltage, and a converter 2 configured to convert an AC voltage into the DC voltage.
The DC pump 1 and the converter 2 have a pump-side connector 27 and a converter-side connector 35, respectively, and the connectors 27 and 35 are integrally connected with each other. In each water supply device, any lead wire is not required to be intervened between the DC pump 1 and the converter 2. Therefore, it is possible to prevent a noise from occurring from a part of the lead wire to suppress a noise influencing a pump control. The whole water supply device can be made compact.

In each water supply device of the first to third embodiments, one of the pump-side connector 27 and the converter-side connector 35 is a pin plug 34, while the other is a terminal receptacle 26 having a hole into which the pin plug 34 is inserted. The converter 2 is rotatable with respect to the DC pump 1 with the pin plug 34 inserted into the hole of the terminal receptacle 26. Thereby, a rotational position of the converter 2 can be freely selected in response to various situations such as a connection direction with an AC power supply or the like.

A casing 30 of the converter 2 includes a base 31 formed with a converter-side connector 35 and a cover 32 facing the base 31. The cover 32 has a top wall 40 approximately in parallel with the base 31, and slant walls 41 inclined and extended to the base 31 side from edges of the top wall 40. Thereby, it is possible to secure, in the converter 2, a storage space in which a tall device(s) can be included, and also to suppress resonance in the storage space.

In the water supply device of the second embodiment, the casing 30 of the converter 2 has the base 31 formed with the converter-side connector 35 and the cover 32 facing the base 31, and the cover 32 has the concave/convex-shaped inner face for noise reduction. Thereby, it is possible to suppress resonance more effectively in the storage space of the converter 2. The noise caused by vibrations of the DC pump 1 can be suppressed more effectively.

In the water supply device of the third embodiment, the casing 30 of the converter 2 has the base 31 formed with the converter-side connector 35, and the base 31 is made of conductive metal. Thereby, a radiation noise from the DC pump 1 side can be shielded with the base 31 to reduce the noise. A radiation performance can be improved with the base 31.

Although the present invention has been described with reference to certain preferred embodiments, the present invention is not limited to the embodiments. Numerous modifications and variations can be made by those skilled in the art without departing from the true spirit and scope of this invention, namely claims.

## Claims

1. A water supply device, comprising:
a DC pump (1) configured to be driven by a DC voltage; and
a converter (2) configured to convert an AC voltage into the DC voltage,
wherein the DC pump (1) comprises a first connector (27) and the converter (2) comprises a second connector (35),
wherein the first and second connectors (27 and 35) are integrally connected with each other.

2. The water supply device of claim 1, wherein one of the first and second connectors (27 and 35) is a pin plug (34) and the other is a terminal receptacle (26) with a hole into which the pin plug (34) is inserted.

3. The water supply device of claim 2, wherein the converter (2) is rotatable with respect to the DC pump (1) with the pin plug (34) inserted into the hole of the terminal receptacle (26)

4. The water supply device of any one of claims 1-3,
wherein the converter (2) comprises a casing (30) that comprises: a base (31) formed with the second connector (35); and a cover (32) facing the base (31), and
wherein the cover (32) comprises: a top wall (40) approximately in parallel with the base (31); and slant walls (41) diagonally extended to the base (31) side from both edges of the top wall (40)

5. The water supply device of any one of claims 1-3,
wherein the converter (2) comprises a casing (30) that comprises: a base (31) formed with the second connector (35); and a cover (32) facing the base (31), and
wherein the cover (32) has a concave/convex-shaped inner face for noise reduction.

6. The water supply device of claim 4, wherein the cover (32) has a concave/convex-shaped inner face for noise reduction.

7. The water supply device of any one of claims 1-3,
wherein the converter (2) comprises a casing (30) that comprises a base (31) formed with the second connector (35), and
wherein the base (31) is made of conductive metal.

8. The water supply device of any one of claims 4-6, wherein the base (31) is made of conductive metal.

9. The water supply device of claim 1,
wherein the DC pump (1) comprises a pump body (10) this has a first connection face (11) and comprises, as the first connector (27), a pin plug extended from the first connection face (11),
wherein the base (31) is made of conductive metal and has a second connection face (33) which has a hole formed at a central part of the second connection face (33) and is in contact with the first connection face (11), said base (31) also comprising, as the second connector (35), a terminal receptacle placed inside the hole of the second connection face (33), and
wherein the first and second connectors (27 and 35) are mechanically and electrically connected with each other in the hole of the base (31).
